# EUROPÄISCHE PATENTSCHRIFT

(11) **EP 2 192 010 B1**
(45) Veröffentlichungstag und Bekanntmachung des Hinweises auf die Patenterteilung: **04.01.2012**
(21) Anmeldenummer: 09014475.9
(22) Anmeldetag: 20.11.2009
(51) Int. Cl.: B60R 25/04, F02D 41/14, H01R 13/639

(54) **Sicherungseinrichtung**
Security device
Dispositif de sécurisation

(30) Priorität: 29.11.2008 DE 102008059686
(43) Veröffentlichungstag der Anmeldung: 02.06.2010
(73) Patentinhaber: DEUTZ Aktiengesellschaft, 51149 Köln (DE)
(72) Erfinder: Brardt, Jürgen, 53804 Much (DE)

(56) Entgegenhaltungen:
- EP-A2- 1 184 237
- DE-A1- 10 334 180
- DE-A1-102004 019 757
- DE-A1-102005 047 590
- DE-A1-102005 056 761
- GB-A- 2 308 927

## Beschreibung

Die Erfindung betrifft ein Verfahren zum Betreiben einer Brennkraftmaschine mit einem elektronischen Steuergerät, das Informationen über den Zustand der Brennkraftmaschine mittels Sensoren erfasst und die Brennkraftmaschine steuert und regelt, wobei eine in dem Steuergerät abgelegte Software aus den Informationen unter Einhaltung der maximal zulässigen Leistung zum Schutz von Brennkraftmaschinenkomponenten und zur Einhaltung der Abgasgesetzgebung die maximale Kraftstoffmenge berechnet, wodurch die maximale Momentanleistung und das maximale Momentandrehmoment der Brennkraftmaschine bestimmt wird, und wobei der Sensor mit dem Steuergerät direkt oder indirekt über eine Leitung steckverbunden ist. Das Dokument DE 10 2005 047590 offenbart ein solches Verfahren.

Ein derartiges Verfahren beziehungsweise Vorgehen ist bekannt und wird standardmäßig zum Betreiben einer Brennkraftmaschine verwendet. Dabei ist zu beachten, dass zumindest sehr ähnliche Brennkraftmaschinen einer Baureihe für unterschiedliche zulässige Leistungen vom Hersteller der jeweiligen Brennkraftmaschine freigegeben sind. Die jeweilige Freigabe hängt von dem jeweiligen Einsatz der Brennkraftmaschine ab, gegebenenfalls unter zusätzlicher Berücksichtigung der für den jeweiligen Einsatz einzuhaltenden Abgasgesetzgebung. Beispielsweise werden Brennkraftmaschinen, die bei bestimmungsgemäßem Einsatz häufig im Bereich der jeweiligen maximal zulässigen Leistung eingesetzt werden, mit einer geringeren zulässigen maximalen Leistung freigegeben als bei der gleichen Brennkraftmaschine, die bei bestimmungsgemäßem Einsatz ganz überwiegend im Bereich von Teillast eingesetzt wird. Ein Beispiel für den ersteren Fall ist die Verwendung bzw. der Einsatz der Brennkraftmaschine bei einem landwirtschaftlichem Gerät, insbesondere einem Schlepper.

Die in dem Steuergerät abgelegten Informationen sind gegen einen unberechtigten Zugriff gesichert, so dass diese normalerweise nicht verändert oder sogar manipuliert werden können. Es ist aber denkbar, dass die mittels Sensoren erfassten Informationen beispielsweise durch Einschaltung von Manipulatoren oder aber durch den Austausch der Sensoren gegen andere verfälscht werden. Beispiele hierfür sind gemessene Temperaturen oder Drücke, deren tatsächlich gemessenen Werte durch einen Manipulator verringert werden. Dadurch wird dem Steuergerät unterstellt, dass beispielsweise eine eingestellte Grenze, die durch eine beispielsweise Bauteiltemperatur oder beispielsweise einen Raildruck vorgegeben ist, noch nicht erreicht ist. Dies hat zur Folge, dass beispielsweise der Raildruck weiter erhöht wird und somit die maximale Leistung der Brennkraftmaschine angehoben wird. Auch ist es denkbar, dass das Steuergerät gegen ein anderes Steuergerät, das für eine andere Brennkraftmaschine mit einer höheren Leistungsfreigabe bestimmt ist und in dem entsprechende Informationen abgelegt sind, ausgetauscht wird.

Der Erfindung liegt die Aufgabe zugrunde, eine solche geschilderte Manipulation zu erschweren oder offensichtlich zu machen

Diese Aufgabe wird durch die Merkmale des kennzeichnenden Teil des Anspruchs 1 gelöst. Die Steckverbindung ist mit einer mechanischen Sicherungseinrichtung gesichert, die bei einer Trennung der Steckverbindung zerstört wird. Wird dann eine Brennkraftmaschine mit einer zerstörten Sicherungseinrichtung beispielsweise in einem Schadensfall (auch nach einer Rückrüstung der ausgetauschten Teile) einer vom Hersteller der Brennkraftmaschine autorisierten Servicewerkstatt zur Reparatur gegeben, ist belegt, dass die Brennkraftmaschine so nicht ausgeliefert worden ist. Beispielsweise kann damit eine Aufhebung der Gewährleistung verbunden sein.

Bei der Erfindung ist die Sicherungseinrichtung ein eine Plombe. Die Plombe sind derart gestaltet, dass nur autorisierte Personen an der Brennkraftmaschine beziehungsweise der entsprechenden Steckverbindung die (richtige) Plombe anbringen können. Die Plombe wird bevorzugt auf die Enden eines Plombendrahtes aufgepresst, wobei der Draht in geeigneter Weise an der Steckverbindung befestigt ist. Derartige Plombendrähte können sich beispielsweise an dem oder den Steckverbinder(n) zwischen dem Steuergerät und dem an dem Steuergerät angeschlossenen Kabelbaum befinden, oder auch an Steckverbindern, die Teile des Kabelbaums verbinden. Dabei ist der Draht so verlegt (beziehungsweise die Steckverbindung so ausgelegt beziehungsweise angeordnet), dass auch nicht das Steuergerät mit dem kompletten Kabelbaum und dem Sensor von der Brennkraftmaschine ohne Trennung der Steckverbindung abgebaut werden kann.

## Patentansprüche

1. Verfahren zum Betreiben einer Brennkraftmaschine mit einem elektronischen Steuergerät, das Informationen über den Zustand der Brennkraftmaschine mittels Sensoren erfasst und die Brennkraftmaschine steuert und regelt, wobei eine in dem Steuergerät abgelegte Software aus den Informationen unter Einhaltung der maximal zulässigen Leistung zum Schutz von Brennkraftmaschinenkomponenten und zur Einhaltung der Abgasgesetzgebung die maximale Kraftstoffmenge berechnet, wodurch die maximale Momentanleistung und das maximale Momentandrehmoment der Brennkraftmaschine bestimmt wird, und wobei der Sensor mit dem Steuergerät direkt oder indirekt über eine Leitung steckverbunden ist,
**dadurch gekennzeichnet, dass** die Steckverbindung mit einer mechanischen Sicherungseinrichtung, die bei einer Trennung der Steckverbindung zerstört wird, gesichert ist, dass die Sicherungseinrichtung eine Plombe ist, wobei ein Plombendraht so angeordnet ist, dass auch nicht das Steuergerät mit dem kompletten audem Steuergerät augeschlossenen Kabelbaum und dem Sensor von der Brennkraftmaschine ohne Trennung der Steckverbindung abgebaut werden kann.

## Claims

1. Method for operating an internal combustion engine having an electronic control unit which acquires information about the state of the internal combustion engine by means of sensors and performs open-loop and closed-loop control of the internal combustion engine, wherein software which is stored in the control unit calculates the maximum quantity of fuel on the basis of the information while complying with the maximum permissible power in order to protect the internal combustion engine components and to comply with exhaust gas legislation, as a result of which the maximum instantaneous power and the maximum instantaneous torque of the internal combustion engine are determined, and wherein the sensor is directly or indirectly connected by means of a plug connection to the control unit via a line,
**characterized in that** the plug connection is secured with a mechanical securing device which is destroyed when the plug connection is disconnected, **in that** the securing device is a lead seal, wherein a lead wire is arranged in such a way that neither the control unit with the complete cable harness connected to the control unit nor the sensor can be removed from the internal combustion engine either without disconnecting the plug connection.

## Revendications

1. Procédé pour faire fonctionner un moteur à combustion interne comprenant un appareil de commande électronique, qui détecte, au moyen de capteurs, des informations relatives à l'état du moteur à combustion interne, et qui commande et régule le moteur à combustion interne, un logiciel déposé dans l'appareil de commande calculant la quantité de carburant maximale, à partir des informations, en respectant la puissance maximale admissible pour la protection des composants du moteur à combustion interne et pour respecter la loi sur les émissions de gaz d'échappement, de sorte que la puissance maximale instantanée et le couple maximal instantané du moteur à combustion interne soient déterminés, le capteur étant raccordé par enfichage à l'appareil de commande directement ou indirectement par le biais d'une ligne,
**caractérisé en ce que** le raccord à fiche est protégé avec un dispositif de protection mécanique qui est détruit dans le cas d'une séparation du raccord à fiche, **en ce que** le dispositif de protection est un plomb, un fil de plomb étant disposé de telle sorte que l'appareil de commande avec le faisceau de câble complet raccordé à l'appareil de commande et le capteur ne puissent pas non plus être démontés du moteur à combustion interne sans séparation du raccord à fiche.
